# EUROPÄISCHE PATENTSCHRIFT

(11) **EP 2 912 489 B1**
(45) Veröffentlichungstag und Bekanntmachung des Hinweises auf die Patenterteilung: **24.04.2019**
(21) Anmeldenummer: 13753268.5
(22) Anmeldetag: 10.07.2013
(51) Int. Cl.: G01S 13/93, G01C 21/36, B60R 1/00, G01S 13/86, G08G 1/16, H04N 7/18

(54) **VERFAHREN UND VORRICHTUNG ZUR ERKENNUNG VON GEKENNZEICHNETEN GEFAHR- UND/ODER BAUSTELLEN IM BEREICH VON FAHRBAHNEN**
METHOD AND DEVICE FOR RECOGNISING MARKED HAZARD AREAS AND/OR CONSTRUCTION AREAS IN THE REGION OF CARRIAGEWAYS
PROCÉDÉ ET DISPOSITIF D'IDENTIFICATION DE ZONES DE DANGER ET/OU DE CHANTIERS SIGNALÉES DANS LA ZONE DE VOIES DE CIRCULATION

(30) Priorität: 25.10.2012 DE 102012110219
(43) Veröffentlichungstag der Anmeldung: 02.09.2015
(73) Patentinhaber: Conti Temic Microelectronic GmbH, 90411 Nürnberg (DE); Continental Teves AG & Co. OHG, 60488 Frankfurt am Main (DE)
(72) Erfinder: HEGEMANN, Stefan, 88239 Wangen (DE); KOMAR, Matthias, 60433 Frankfurt (DE); LÜKE, Stefan, 61191 Rosbach vor der Höhe (DE)
(86) Internationale Anmeldenummer: PCT/DE2013/200034
(87) Internationale Veröffentlichungsnummer: WO 2014/063688

(56) Entgegenhaltungen:
- DE-A1-102004 003 848
- DE-A1-102008 020 447
- JP-A- 2009 128 356

## Beschreibung

Die Erfindung betrifft ein Verfahren zur Erkennung von gekennzeichneten Gefahr- und/oder Baustellen im Bereich von Fahrbahnen gemäß Oberbegriff des Patentanspruchs 1. Ferner betrifft die Erfindung eine Vorrichtung zur Durchführung des erfindungsgemäßen Verfahrens sowie ein Fahrzeug mit einer solchen Vorrichtung.

Aus der gattungsbildenden DE 10 2004 003 848 A1 ist ein solches Verfahren bekannt, bei dem zur Erkennung von gekennzeichneten Gefahr- und/oder Baustellen im Bereich von Fahrbahnen Abstandsbilder eines Erfassungsbereichs eines an einem Fahrzeug angeordneten Sensors für elektromagnetische Strahlung, insbesondere eines Laserscanners verwendet werden, derart dass in diesen Abstandsbildern nach Kennzeichen für gekennzeichnete Gefahr- und/oder Baustellen gesucht wird. Zur Erkennung solcher Kennzeichen für gekennzeichnete Gefahr- und/oder Baustellen werden bekannte Verfahren der Objekterkennung und/oder -verfolgung verwendet. Diese Kennzeichen können durch entsprechende Vorgaben der Straßenverwaltung bzw. gesetzliche Vorgaben, in Deutschland beispielsweise die Straßenverkehrsordnung, vorgegeben sein und können beispielsweise Markierungen auf einer Fahrbahn, Barrieren, Pylonen oder Baken darstellen, wobei die letztgenannten Gegenständen meist nur provisorisch zur Kennzeichnung eines provisorisch geänderten Fahrspurverlaufs aufgestellt werden.

Der Vollständigkeit halber sei auf die JP 2009 128 356 A verwiesen, die ein Navigationssystem für ein Fahrzeug beschreibt. Bei diesem bekannten Navigationssystem werden zur Darstellung von POIs (point of interest) auf einem Bildschirm die Bilddaten einer in dem Fahrzeug montierten Kamera verwendet. Mit dieser Kamera wird ein Referenzobjekt, bspw. eine Ampelanlage detektiert und die relativen Positionskoordinaten der POIs zu diesem Referenzobjekt bestimmt und auf dem Bildschirm dargestellt.

Ausgehend von diesem Stand der Technik ist es Aufgabe der Erfindung ein Verfahren der eingangs genannten Art anzugeben, mit welchem eine verbesserte Erkennung von Baustellensituationen sowohl in urbanen als auch in ländlichen Umgebungsszenarien möglich ist.

Diese Aufgabe wird gelöst durch ein Verfahren bzw. eine Vorrichtung mit den Merkmalen des Patentanspruchs 1 bzw. 7.

Ein solches Verfahren zur Erkennung von gekennzeichneten Gefahr- und/oder Baustellen im Bereich von Fahrbahnen, bei dem mittels wenigstens eines in einem Fahrzeug installierten und als Kamerasystem ausgebildeten Umfeldsensors Gefahr- und/oder Baustellen anzeigenden Objekte erkannt werden, wobei der Umfeldsensor eine Stereokamera oder eine Monokamera und einen Radarsensor aufweist, zeichnet sich erfindungsgemäß dadurch aus, dass
- mittels des Umfeldsensors eine Ampelanlage erkannt wird,
- mittels des Umfeldsensors Positionsdaten der Ampelanlage bestimmt werden,
- aus von dem Umfeldsensor erfassten Umfelddaten ein Umfeldszenarium hinsichtlich einer Umgebungsstruktur des Fahrzeugs klassifiziert wird,
- in Abhängigkeit der Klassifizierung ein Referenzmodell des Umfeldszenariums bestimmt wird, wobei entsprechend der Klassifikation gegebenenfalls die Position einer erwarteten Ampelanlage in dem Referenzmodell abgebildet wird, und
- auf eine Gefahr- und/oder Baustelle kennzeichnende Ampelanlage geschlossen wird, falls dieses Referenzmodell ohne eine Ampelanlage bestimmt wird oder das Referenzmodell mit einer Ampelanlage mit von den Positionsdaten der erkannten Ampelanlage abweichenden Positionsdaten bestimmt wird.

Diese Erfindung geht von der Erkenntnis aus, dass die Position einer Ampelanlage (in den deutschen Richtlinien als Lichtsignalanlage bezeichnet) als Indikator für eine Gefahrstelle und/oder für eine Baustelle verwendet werden kann, wenn deren Position in dem erfasstem und ausgewerteten Umfeldszenarium von einer in einem solchen Umfeldszenarium erwarteten Position einer Ampelanlage abweicht.

Ampelanlagen werden zum einen stationär an Kreuzungen und Einmündungen an bestimmten Positionen eingesetzt und zum anderen als mobile Anlagen an Engstellen, wie zum Bsp. Baustellen aufgestellt. Die Positionen für Ampelanlagen für eine Umgebungsstruktur mit bspw. einer Kreuzung oder einer Einmündung sind bekannt, d. h. sind in dem Referenzmodell des Umfeldszenariums abgebildet. Damit kann anhand der erfassten Umgebungsstruktur, bspw. eine Kreuzung, die Position für eine erwartete Ampelanlage aus dem Referenzmodell bestimmt werden und diese Position mit einer tatsächlich detektierten Ampelanlage verglichen werden. Unterscheiden sich diese Positionsdaten, kann bei der detektierten Ampelanlage mit großer Wahrscheinlichkeit von einer Baustellenampel oder einer eine Gefahrstelle anzeigende Ampelanlage ausgegangen werden. Auch in dem Fall, wenn das Referenzmodell keine Ampelanlage anzeigt, kann bei der detektierten Ampelanlage mit großer Wahrscheinlichkeit von einer Baustellenampel oder einer eine Gefahrstelle anzeigende Ampelanlage ausgegangen werden.

In Ausgestaltung der Erfindung wird das Referenzmodell mittels navigationsbasierten Informationen erstellt. Da in heutigen Fahrzeugen in der Regel bereits ein Navigationssystem vorhanden ist, kann das erfindungsgemäße Verfahren kostengünstig realisiert werden.

Um die Erkennungssicherheit zu verbessern, ist gemäß einer weiteren Ausgestaltung der Erfindung vorgesehen, dass zur Erkennung einer eine Gefahr- und/oder Baustelle kenzeichnende Ampelanlage eine Objektklassifizierung hinsichtlich baustellenspezifischer und/oder gefahrstellenspezifischer Merkmale der Ampelanlage durchgeführt wird. Da solche Ampelanlagen als mobile Anlagen aufgestellt werden, müssen diese mit einer eigenen Stromversorgung, also bspw. mit einer Batterie oder einem Photovoltaik-Paneel ausgestattet werden. Eine Batterie wird in der Regel in einem im Bereich des Ampelfußes sich befindenden Batteriekasten untergebracht, das Photovoltaik-Paneel ist in der Regel oberhalb der Signalleuchten dachförmig angeordnet. Damit können diese Merkmale, welche die Stromversorgung der Ampelanlage betreffen, als baustellenspezifische und/oder gefahrstellenspezifische Merkmale einer Ampelanlage klassifiziert und mittels einer Objekterkennungssoftware erkannt werden.

Weiterhin wird gemäß einer vorteilhaften Ausgestaltung der Erfindung das Referenzmodell aus in einer Navigationsdatenbank abgelegten digitalen Kartendaten eines Verkehrswegenetzes erzeugt, wobei die digitalen Kartendaten Baustelleninformationen aufweisen. Solche Kartendaten können bereits in einem Infotainment-System des Fahrzeugs abgelegt sein oder auch über Online-Dienste mittels einer Kommunikationsverbindung in das Fahrzeug übertragen werden. Damit wird eine besonders hohe Erkennungssicherheit gewährleistet.

Eine weitere Verbesserung der Erkennungssicherheit hinsichtlich einer Gefahrstelle und/oder Baustelle kann durch Fusion unterschiedlicher, in dem Fahrzeug vorhandenen Erkennungssysteme erreicht werden, indem gemäß einer Ausgestaltung der Erfindung die mittels des Umfeldsensors erfassten Informationen über den Verlauf der Fahrspur und/oder erkannten Fahrspurinformationen als Indikator für das Vorliegen einer eine Gefahr- und/oder Baustelle kennzeichnende Ampelanlage verwendet werden. Alternativ oder zusätzlich können auch die mittels des Umfeldsensors erfassten Informationen über erkannte Verkehrszeichen als Indikation für eine solche Ampelanlage verwendet werden.

Eine Vorrichtung zur Durchführung des erfindungsgemäßen Verfahrens umfasst als Umfeldsensor ein Kamerasystem sowie die zugehörige Hardware, wie bspw. Auswerte- und Objekterkennungssysteme. Eine solche Vorrichtung eignet sich zur Verwendung in einem Fahrzeug, wie bspw. einem Kraft- Hybrid- oder Elektrofahrzeug.

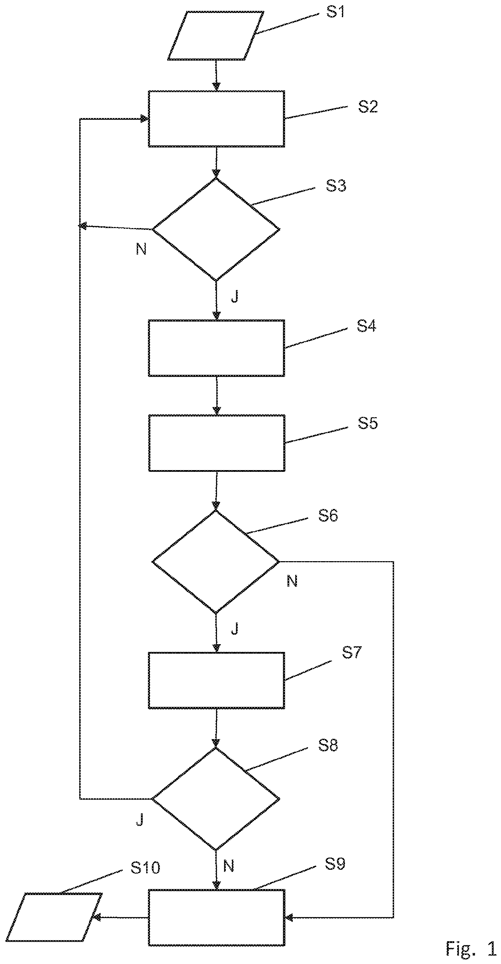

Die Erfindung wird nachfolgend unter Bezugnahme auf das beigefügte Ablaufdiagramm gemäß Figur 1 näher erläutert.

Das anhand von Figur 1 als Ausführungsbeispiel beschriebene Verfahren zur Erkennung von gekennzeichneten Gefahr- und/oder Baustellen im Bereich von Fahrbahnen wird mittels einer in einem Fahrzeug installierten Vorrichtung durchgeführt, welche als Umgebungssensor entweder eine Mono- oder Stereokamera aufweist, deren Sensorsignale zur Auswertung einer Auswerte- und Objekterkennungseinheit zugeführt werden. Zusätzlich können auch weitere Umgebungssensoren, wie bspw. Radarsensor eingesetzt werden.

Nach dem Start (Verfahrensschritt S1) wird mittels des Umgebungssensors die Fahrzeugumgebung, d. h. die im Erfassungsbereich des Umgebungssensors liegende Umgebung gemäß einem Verfahrensschritt S2 erfasst und ausgewertet. Falls gemäß einem nachfolgenden Verfahrensschritt S3 eine Ampelanlage erkannt wird, wird in einem weiteren Verfahrensschritt S4 deren Positionsdaten bestimmt, andernfalls, wenn keine Ampelanlage erkannt wird, erfolgt ein Rücksprung auf Verfahrensschritt S2.

In einem weiteren Verfahrensschritt S5 wird eine Klassifizierung des Umfeldszenariums sowie die Bestimmung eines Referenzmodells durchgeführt. Das von dem Umgebungssensor erfasste Umfeldszenarium wird hinsichtlich der Umgebungsstruktur, ob also beispielsweise eine Kreuzung oder eine Einmündung vorliegt, oder lediglich ein weiterführender Straßenabschnitt oder Fahrbahnabschnitt erkannt wurde, klassifiziert. Entsprechend dieser Klassifizierung des Umfeldszenariums erfolgt die Bestimmung bzw. Auswahl eines Referenzmodells, welches dieses Umfeldszenarium abbildet. Entsprechende Referenzmodelle können beispielsweise in einem Speicher der Auswerte- und Objekterkennungseinheit abgelegt sein.

Solche Referenzmodelle können mittels navigationsbasierten Informationen erstellt werden, wobei diese Informationen beispielsweise von einem Navigationssystem des Fahrzeugs stammen. Ferner ist es auch möglich, das Referenzmodell aus in einer Navigationsdatenbank abgelegten digitalen Kartendaten eines Verkehrswegenetzes zu erzeugen, wobei die digitalen Kartendaten Baustelleninformationen aufweisen. Solche Kartendaten können bereits in einem Infotainment-System des Fahrzeugs abgelegt sein oder auch über Online-Dienste mittels einer drahtlosen Kommunikationsverbindung in das Fahrzeug übertragen werden.

Mit dem Verfahrensschritt S6 wird geprüft, ob das Referenzmodell eine Ampelanlage anzeigt. Zeigt nun das gemäß Verfahrensschritt S5 bestimmte Referenzmodell keine Ampelanlage, kann mit großer Wahrscheinlichkeit davon ausgegangen werden, dass die mit Verfahrensschritt S3 erkannte Ampelanlage gemäß Verfahrensschritt S9 eine Baustellenampel oder eine Gefahrstelle anzeigende Ampelanlage darstellt. Mit dem nachfolgenden Verfahrensschritt S10 ist das Verfahren beendet bzw. es erfolgt ein Rücksprung auf Verfahrensschritt S2.

Im anderen Fall, wenn das Referenzmodell eine Ampelanlage anzeigt, wird in einem nachfolgenden Verfahrensschritt S7 die Positionsdaten der Ampelanlage aus dem Referenzmodell mit den Positionsdaten der im Verfahrensschritt S3 detektierten Ampelanlage verglichen.

Wird in einem weiteren nachfolgenden Verfahrensschritt S8 eine Übereinstimmung festgestellt, wird davon ausgegangen, dass eine der Umgebungsstruktur entsprechende Ampelanlage, also bspw. eine Ampel an einer Kreuzung und keine Baustellenampel oder eine Gefahrstelle anzeigende Ampelanlage vorliegt. Daher erfolgt ein Rücksprung auf den Verfahrensschritt S2.

Wird dagegen keine Übereinstimmung der Positionsdaten festgestellt, bedeutet dies, dass die mit Verfahrensschritt S3 detektierte Ampelanlage keine der Umgebungsstruktur entsprechende Ampelanlage darstellt und daher gemäß Verfahrensschritt S9 mit großer Wahrscheinlichkeit von einer Baustellenampel oder einer eine Gefahrstelle anzeigende Ampelanlage auszugehen ist. Mit dem nachfolgenden Verfahrensschritt S10 ist das Verfahren beendet bzw. es erfolgt ein Rücksprung auf Verfahrensschritt S2.

Dieses beschriebene Verfahren kann dahingehend verbessert werden, dass zur Erkennung einer eine Gefahr- und/oder Baustelle kenzeichnende Ampelanlage eine Objektklassifizierung hinsichtlich baustellenspezifischer und/oder gefahrstellenspezifischer Merkmale der Ampelanlage durchgeführt wird. Da solche Ampelanlagen als mobile Anlagen aufgestellt werden, müssen diese mit einer eigenen Stromversorgung, also bspw. mit einer Batterie oder einem Photovoltaik-Paneel ausgestattet werden. Eine Batterie wird in der Regel in einem im Bereich des Ampelfußes sich befindenden Batteriekasten untergebracht, das Photovoltaik-Paneel ist in der Regel oberhalb der Signalleuchten dachförmig angeordnet. Damit können diese Merkmale, welche die Stromversorgung der Ampelanlage betreffen, als baustellenspezifische und/oder gefahrstellenspezifische Merkmale einer Ampelanlage klassifiziert und mittels einer Objekterkennungssoftware erkannt werden.

Eine weitere Verbesserung des beschriebenen Verfahrens zur Verbesserung der Erkennungssicherheit hinsichtlich der Erkennung einer Gefahrstelle und/oder Baustelle kann durch Fusion unterschiedlicher, in dem Fahrzeug vorhandenen Erkennungssysteme erreicht werden, indem die mittels des Umfeldsensors erfassten Informationen über den Verlauf der Fahrspur und/oder erkannten Fahrspurinformationen als Indikator für das Vorliegen einer eine Gefahr- und/oder Baustelle kennzeichnende Ampelanlage verwendet werden. Die Fahrspurinformation kann bspw. die Farbe der Spurmarkierung beinhalten. Alternativ oder zusätzlich können auch die mittels des Umfeldsensors erfassten Informationen über erkannte Verkehrszeichen als Indikator für das Vorliegen einer eine Gefahr- und/oder Baustelle kennzeichnende Ampelanlage verwendet werden.

## Patentansprüche

1. Verfahren zur Erkennung von gekennzeichneten Gefahr- und/oder Baustellen im Bereich von Fahrbahnen, bei dem mittels wenigstens eines in einem Fahrzeug installierten und als Kamerasystem ausgebildeten Umfeldsensors Gefahr- und/oder Baustellen anzeigenden Objekte erkannt werden, wobei der Umfeldsensor eine Stereokamera oder eine Monokamera und einen Radarsensor aufweist,
**dadurch gekennzeichnet, dass**
- mittels des Umfeldsensors eine Ampelanlage erkannt wird,
- mittels des Umfeldsensors Positionsdaten der Ampelanlage bestimmt werden,
- aus von dem Umfeldsensor erfassten Umfelddaten ein Umfeldszenarium hinsichtlich einer Umgebungsstruktur des Fahrzeugs klassifiziert wird,
- in Abhängigkeit der Klassifizierung ein Referenzmodell des Umfeldszenariums bestimmt wird, wobei entsprechend der Klassifikation gegebenenfalls die Position einer erwarteten Ampelanlage in dem Referenzmodell abgebildet wird, und
- auf eine Gefahr- und/oder Baustelle kennzeichnende Ampelanlage geschlossen wird, falls dieses Referenzmodell ohne eine Ampelanlage bestimmt wird oder das Referenzmodell mit einer Ampelanlage mit von den Positionsdaten der erkannten Ampelanlage abweichenden Positionsdaten bestimmt wird.

2. Verfahren nach Anspruch 1,
**dadurch gekennzeichnet, dass** das Referenzmodell mittels navigationsbasierten Informationen erstellt wird.

3. Verfahren nach Anspruch 1 oder 2,
**dadurch gekennzeichnet, dass** zur Erkennung einer eine Gefahr- und/oder Baustelle kennzeichnende Ampelanlage eine Objektklassifizierung hinsichtlich baustellenspezifischer und/oder gefahrstellenspezifischer Merkmale der Ampelanlage durchgeführt wird.

4. Verfahren nach einem der vorhergehenden Ansprüche,
**dadurch gekennzeichnet, dass** das Referenzmodell aus in einer Navigationsdatenbank abgelegten digitalen Kartendaten eines Verkehrswegenetzes erzeugt wird, wobei die digitalen Kartendaten Baustelleninformationen aufweisen.

5. Verfahren nach einem der vorhergehenden Ansprüche,
**dadurch gekennzeichnet, dass** die mittels des Umfeldsensors erfassten Informationen über einen Verlauf der Fahrspur einer Fahrbahn und/oder erkannten Fahrspurinformationen einer Fahrbahn als Indikator für eine Gefahr- und/oder Baustelle kennzeichnende Ampelanlage verwendet werden.

6. Verfahren nach einem der vorhergehenden Ansprüche,
**dadurch gekennzeichnet, dass** die mittels des Umfeldsensors erfassten Informationen über erkannte Verkehrszeichen als Indikator für ein Gefahr- und/oder Baustelle kennzeichnende Ampelanlage verwendet werden.

7. Vorrichtung zur Erkennung von gekennzeichneten Gefahr- und/oder Baustellen im Bereich von Fahrbahnen, bei dem zur Durchführung des Verfahrens nach einem der vorhergehenden Ansprüche der Umfeldsensor als Kamerasystem ausgebildet ist.

8. Fahrzeug mit einer Vorrichtung gemäß Anspruch 7.

## Claims

1. A method for recognizing marked hazard areas and/or construction areas in the region of carriageways, in which method objects indicating hazard areas and/or construction areas are recognized by means of at least one environment sensor installed in a vehicle and designed as a camera system, wherein the environment sensor has a stereo camera or a mono camera and a radar sensor, **characterized in that**
- a traffic light system is recognized by means of the environment sensor,
- positional data of the traffic light system are determined by means of the environment sensor,
- an environment scenario is classified with respect to a surroundings structure of the vehicle from environment data detected by the environment sensor,
- a reference model of the environment scenario is determined as a function of the classification, wherein the position of an expected traffic light system is illustrated in the reference model in accordance with the classification, if applicable, and
- a conclusion is drawn about a traffic light system marking a hazard area and/or a construction area, if said reference model is determined without a traffic light system or the reference model is determined with a traffic light system having positional data differing from the positional data of the recognized traffic light system.

2. The method according to Claim 1,
**characterized in that** the reference model is drawn up by means of navigation-based information.

3. The method according to Claim 1 or 2,
**characterized in that**, in order to recognize a traffic light system marking a hazard area and/or a construction area, an object classification is carried out with respect to features of the traffic light system, which are specific to a construction area and/or specific to a hazard area.

4. The method according to any one of the preceding claims,
**characterized in that** the reference model is produced from digital map data of a network of traffic routes stored in a navigation database, wherein the digital map data have information about construction areas.

5. The method according to any one of the preceding claims,
**characterized in that** the information detected by means of the environment sensor regarding a course of the lane of a carriageway and/or recognized lane information of a carriageway is used as an indicator of a traffic light system marking a hazard area and/or a construction area.

6. The method according to any one of the preceding claims,
**characterized in that** the information detected by means of the environment sensor regarding recognized traffic signs is used as an indicator of a traffic light system marking a hazard area and/or a construction area.

7. A device for recognizing marked hazard areas and/or construction areas in the region of carriageways, in which the environment sensor is designed as a camera system in order to carry out the method according to any one of the preceding claims.

8. A vehicle having a device according to Claim 7.

## Revendications

1. Procédé de détection de zones à risque et/ou de chantiers caractérisées dans l'emprise de voies de circulation, où des objets caractérisant des zones à risque et/ou des chantiers sont détectés au moyen d'au moins un détecteur d'environnement installé dans un véhicule et réalisé comme système de caméra, ledit détecteur d'environnement comprenant une caméra stéréo ou une caméra mono et un capteur radar,
**caractérisé en ce**
- **qu'**un feu de circulation est détecté au moyen du détecteur d'environnement,
- **que** des données de position du feu de circulation sont déterminées au moyen du détecteur d'environnement,
- **qu'**un scénario environnemental relatif à une structure environnante du véhicule est classifié à partir des données environnementales détectées par le détecteur d'environnement,
- **qu'**un modèle de référence du scénario environnemental est déterminé en fonction de la classification, la position d'un feu de circulation attendu dans le modèle de référence étant éventuellement représentée conformément à la classification, et
- **qu'**il est conclu à un feu de circulation caractérisant une zone à risque et/ou un chantier si ledit modèle de référence est déterminé sans un feu de circulation ou si le modèle de référence est déterminé avec un feu de circulation ayant des données de position différant des données de position du feu de circulation détecté.

2. Procédé selon la revendication 1,
**caractérisé en ce que** le modèle de référence est établi au moyen d'informations basées sur la navigation.

3. Procédé selon la revendication 1 ou la revendication 2,
**caractérisé en ce qu'**une classification d'objet relative à des caractéristiques du feu de circulation spécifiques au chantier et/ou au lieu à risque est effectuée pour la détection d'un feu de circulation caractérisant une zone à risque et/ou un chantier.

4. Procédé selon l'une des revendications précédentes,
**caractérisé en ce que** le modèle de référence est généré à partir de données cartographiques d'un réseau de voies de circulation mémorisées dans une base de données de navigation, les données cartographiques numériques comprenant des informations sur les chantiers.

5. Procédé selon l'une des revendications précédentes,
**caractérisé en ce que** les informations saisies au moyen du détecteur d'environnement sur le tracé de la voie d'une chaussée et/ou les informations de voie reconnues pour une chaussée sont exploitées comme indicateur pour un feu de circulation caractérisant une zone à risque et/ou un chantier.

6. Procédé selon l'une des revendications précédentes,
**caractérisé en ce que** les informations saisies au moyen du détecteur d'environnement sur des panneaux de signalisation reconnus sont exploitées comme indicateur pour un feu de circulation caractérisant une zone à risque et/ou un chantier.

7. Dispositif pour la détection de zones à risque et/ou de chantiers caractérisées dans l'emprise de voies de circulation, où le détecteur d'environnement est réalisé comme système de caméra pour l'exécution du procédé selon l'une des revendications précédentes.

8. Véhicule pourvu d'un dispositif selon la revendication 7.
